# EUROPÄISCHE PATENTSCHRIFT

(11) **EP 3 679 616 B1**
(45) Veröffentlichungstag und Bekanntmachung des Hinweises auf die Patenterteilung: **11.08.2021**
(21) Anmeldenummer: 18737163.8
(22) Anmeldetag: 20.06.2018
(51) Int. Cl.: H01M 8/0286, B65H 29/30, H01M 8/0273, H01M 8/0297, B29C 45/14, H01M 8/0267, H01M 8/1018

(54) **VERFAHREN ZUR HERSTELLUNG EINES VERBUNDS AUS EINER BIPOLARPLATTE UND EINER MEMBRAN-ELEKTRODEN-EINHEIT MIT HILFE EINER MAGNETISCHEN FIXIERUNG**
METHOD FOR PRODUCING AN ASSEMBLY OF A BIPOLAR PLATE AND A MEA EMPLOYING MAGNETIC FIXATION MEANS
MÉTHODE POUR FABRIQUER UN ASSEMBLAGE D'UNE PLAQUE BIPOLAIRE AT D'UN AME UTILISANT DES MOYENS DE FIXATION MAGNÉTIQUES

(30) Priorität: 05.09.2017 DE 102017215507
(43) Veröffentlichungstag der Anmeldung: 15.07.2020
(73) Patentinhaber: Audi AG, 85045 Ingolstadt (DE); Volkswagen AG, 38440 Wolfsburg (DE)
(72) Erfinder: DICKSON, Brian Walter, Burnaby, British Columbia V5J 5J8 (CA)
(86) Internationale Anmeldenummer: PCT/EP2018/066358
(87) Internationale Veröffentlichungsnummer: WO 2019/048101

(56) Entgegenhaltungen:
- DE-A1-102009 039 901
- DE-A1-102013 004 473
- JP-A- 2007 242 532
- JP-A- 2009 252 627
- KR-A- 20120 115 637
- US-A1- 2009 004 542

## Beschreibung

Die Erfindung betrifft ein Verfahren zum Herstellen eines Verbunds aus einer Bipolarplatte und einer Membran-Elektroden-Einheit für eine Brennstoffzelle oder einen Brennstoffzellenstapel, wobei die Bipolarplatte zwei gegenüberliegende Platten umfasst und jede Platte eine Zellseite und eine Kühlseite aufweist.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Einheit (MEA für membrane electrode assembly), die ein Verbund aus einer ionenleitenden, insbesondere protonenleitenden Membran und jeweils einer beidseitig an der Membran angeordneten Elektrode (Anode bzw. Kathode) ist. Zudem können Gasdiffusionsschichten (GDL) beidseitig der Membran-Elektroden-Einheit an den der Membran abgewandten Seiten der Elektroden angeordnet sein. In der Regel wird die Brennstoffzelle durch eine Vielzahl, im Stapel (stack) angeordneter MEAs gebildet, deren elektrische Leistungen sich addieren. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, sodass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser. Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.

Die Brennstoffzelle wird durch eine Vielzahl im Stapel angeordneter Einzelzellen gebildet, sodass, wie bereits ausgeführt, auch von einem Brennstoffzellenstapel gesprochen wird. Zwischen den Membran-Elektroden-Einheiten sind Bipolarplatten angeordnet, welche eine Versorgung der Einzelzellen mit den Betriebsmedien, also den Reaktanden und einer Kühlflüssigkeit sicherstellen. Zudem sorgen die Bipolarplatten für einen elektrisch leitfähigen Kontakt zu den Membran-Elektroden-Einheiten.

Zwischen den Membran-Elektroden-Einheiten und den Bipolarplatten sind Dichtungen angeordnet, welche die Anoden- und Kathodenräume nach außen abdichten und ein Austreten der Betriebsmedien aus der Brennstoffzelle verhindern. Die Dichtungen können seitens der Membran-Elektroden-Einheiten oder der Bipolarplatten vorgesehen und insbesondere mit diesen Komponenten verbunden sein.

JP 2009252627 A beschreibt eine Separatorplatte mit einer Dichtung sowie ein Verfahren zu deren Herstellung. Die Separatorplatte wird in einem Spritzgusswerkzeug angeordnet und von dem Werkzeug klemmend gehalten, wobei eine Dichtung auf der Separatorplatte im Kantenbereich angespritzt wird.

In der DE 101 60 905 A1 wird ein Verbund aus zwei Separatorplatten mit einer dazwischen angeordneten MEA offenbart. Die MEA springt gegenüber den Enden der Separatorplatten zurück, so dass ein Spalt zwischen diesen im Kantenbereich gegeben ist. Eine Dichtung umgreift zum einen die Anordnung und ist zudem in den Spalt zwischen den Separatorplatten eingebracht.

DE 11 2004 002 350 B4 betrifft ein Verfahren zum Herstellen einer Brennstoffzelle, bei dem eine MEA mittels eines Halteelements, das eine Bipolarplatte hält, ausgestanzt und direkt mit der Bipolarplatte auf einem Brennstoffzellenstapel abgelegt wird. Das Halteelement ist als Ansaugpolster oder magnetisches Spannfutter ausgebildet.

In DE 10 2009 039 901 A1 und US 2009/0004542 A1 beschreiben jeweils einen Verbund aus zwei Bipolarplatten und einer Membran-Elektroden-Einheit, die eine umlaufende Dichtung aufweist.

In JP 2009-252627 wird ein Verfahren zur Ausbildung eines Verbundes aus einer Bipolarplatten und einer Membran-Elektroden-Einheit durch Spritzguss beschrieben.

Der Erfindung liegt nun die Aufgabe zugrunde, ein Verfahren zur Herstellung eines Verbundes aus einer Bipolarplatte und einer MEA , mit dem eine Fehlerquote beim Anordnen oder Ausrichten der Einzelbestandteile des Verbundes reduziert wird.

Diese Aufgabe wird durch ein Verfahren nach Anspruch 1 gelöst. Vorteilhafte Ausgestaltungen sind in den Unteransprüchen gekennzeichnet.

Erfindungsgemäß wird ein Verfahren zum Herstellen eines Verbunds aus einer Bipolarplatte und einer Membran-Elektroden-Einheit (MEA) für eine Brennstoffzelle oder einen Brennstoffzellenstapel bereitgestellt, wobei die Bipolarplatte ein paar gegenüberliegender Platten und jede Platte eine Zellseite und eine Kühlseite aufweist, und das Verfahren die Schritte umfasst:
a) Anordnen der Bipolarplatte in einem Werkzeug, das ein ferromagnetisches oder magnetisches Element aufweist, das die Auflagefläche für die Bipolarplatte teilweise ausbildet und aus dem Werkzeug entnehmbar ausgebildet ist,
b) Anordnen einer Membran-Elektroden-Einheit auf der der Auflagefläche des Werkzeugs entgegengesetzten Seite der Bipolarplatte,
c) Anordnen eines zweiten ferromagnetischen oder magnetischen Elements, das korrespondierend zu dem ersten ferromagnetischen oder magnetischen Element ausgebildet ist, um aufeinander eine magnetische Anziehung ausüben zu können, auf der Membran-Elektroden-Einheit derart, dass beide ferromagnetische oder magnetische Elemente zumindest teilweise kongruent sind,
d) Entnehmen von miteinander durch die beiden ferromagnetischen oder magnetischen Elemente fixierter Membran-Elektroden-Einheit und Bipolarplatte,
e) Einlegen von miteinander durch die beiden ferromagnetischen oder magnetischen Elemente fixierter Membran-Elektroden-Einheit und Bipolarplatte in ein zweites Werkzeug, das in geschlossenem Zustand zumindest einen Formraum auf einer Seite oder auf beiden Seiten des Randbereichs der Bipolarplatte und einen zweiten Raum zur Aufnahme der beiden magnetischen oder ferromagnetischen Elemente aufweist, wobei der Formraum und der zweite Raum voneinander getrennt sind,
f) Einspritzen einer Schmelze eines polymeren Dichtungsmaterials in den Formraum des Spritzgusswerkzeuges,
g) Erstarren lassen der Schmelze,
h) Entformen und Entnahme des in f) gebildeten Verbundes, und
i) gegebenenfalls Entfernen der beiden magnetischen oder ferromagnetischen Elemente.

Das Werkzeug in Schritt a) weist vorzugsweise zur Positionierung der Bipolarplatte einen Anschlag auf, an dem die Bipolarplatte mit seinem Randbereich angelegt wird, so dass ein Positionierungsvorgang zeitsparend durchführbar ist.

Die Auflagefläche des Werkzeugs ist vorzugsweise plan ausgebildet, um die Bipolarplatte spannungsfrei lagern zu können.

Vorzugsweise ist zudem das Werkzeug derart ausgebildet, dass das ferromagnetische oder magnetische Element orthogonal zur Auflagefläche entnehmbar ist.

Bevorzugterweise wird in Schritt c) das zweite ferromagnetische oder magnetische Element auf dem ersten ferromagnetischen oder magnetischen Element deckungsgleich (kongruent) angeordnet.

Bei dem zweiten Werkzeug in Schritt e) handelt es sich vorzugsweise um ein Spritzgusswerkzeug.

Das erste und das zweite Werkzeug bestehen, abgesehen von den temporär darin befindlichen ferromagnetischen oder magnetischen Elementen, vorzugsweise aus einem nicht ferromagnetischen oder nicht magnetischen Material, um unerwünschte Wechselwirkungen mit den beiden ferromagnetischen oder magnetischen Elementen zu vermeiden.

Bei Ausgestaltung eines Elements als magnetisch kann dieses als Dauermagnet oder vorzugsweise als Elektromagnet ausgebildet sein.

Die verfahrensgemäß eingesetzte Bipolarplatte weist einen umlaufenden Randbereich auf, der eine ebenfalls umlaufende Vertiefung besitzt, so dass der Randbereich neben der Vertiefung zwei gegenüber der Vertiefung erhöht liegende Teilbereiche besitzt.

An der Kante des Randbereichs und somit benachbart zur Vertiefung kann vorzugsweise eine Dichtung angeordnet sein, die beim Anspritzen des Dichtungsmaterials vorzugsweise in dieses Material eingebunden wird.

Ebenso verhält es sich mit der MEA, die den aktiven Bereich der Bipolarplatte überdeckt, jedoch auch über diesen hinausgeht. Dabei liegt diese auf dem zum aktiven Bereich benachbarten Teilbereich des Randbereichs auf und ragt frei über einen Teil der Vertiefung. Beim Anspritzen des Dichtungsmaterials wird daher die Kante der MEA in die resultierende Dichtung eingebunden, so dass vorteilhafterweise bei der weiteren Verarbeitung des erhaltenen Verbundes keine Gefahr besteht, dass die MEA in Relation zur Bipolarplatte verrutscht und gegebenenfalls dadurch beschädigt wird.

Das oder die für beide Dichtungen verwendbare(n) Polymere sind grundsätzlich dem Fachmann bekannt, insbesondere handelt es sich um einen Thermoplasten, ein Elastomer oder ein thermoplastisches Elastomer.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: in einer schematischen Darstellung einen Brennstoffzellenstapel nach dem Stand der Technik,
- Figur 2: in einer seitlich geschnittenen Teilansicht eine Bipolarplatte aus zwei Platten mit auf einer der Platten im Randbereich angeordneten Dichtung,
- Figur 3: in einer seitlich geschnittenen Teilansicht die Bipolarplatte in einem Werkzeug mit einem ferromagnetischen Element,
- Figur 4: in einer seitlich geschnittenen Teilansicht die Bipolarplatte in dem Werkzeug und einer auf der Bipolarplatte angeordneten MEA,
- Figur 5: in einer seitlich geschnittenen Teilansicht die Bipolarplatte mit darauf angeordneter MEA und einem auf der MEA angeordnetem magnetischen Fixierelement,
- Figur 6: in einer seitlich geschnittenen Teilansicht die Entnahme der Bipolarplatte mit der MEA sowie der Fixierelemente als Einheit,
- Figur 7: in einer seitlich geschnittenen Teilansicht die Anordnung der Bipolarplatte mit der MEA sowie der Fixierelemente als Einheit in einem zweiten Werkzeug, und
- Figur 8: in einer seitlich geschnittenen Teilansicht der Verbund aus Bipolarplatte und MEA mit zwei sich überlappenden Dichtungen im Randbereich einer Platte der Bipolarplatte.

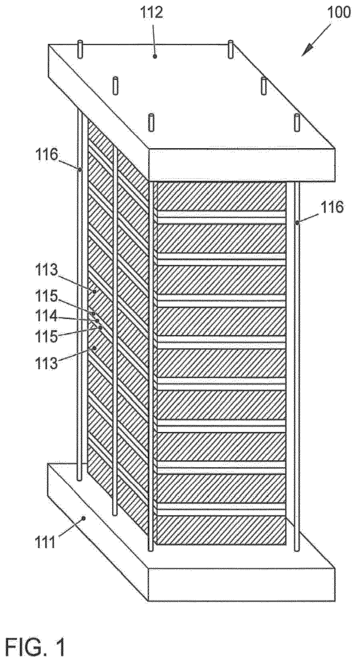

Figur 1 zeigt in einer stark schematisierten Darstellung einen Brennstoffzellenstapel 100 nach dem Stand der Technik. Der Brennstoffzellenstapel 100 umfasst zwei Endplatten 111, 112, zwischen denen eine Vielzahl übereinander gestapelter Stapelelemente angeordnet sind, welche Bipolarplatten 113 und Membran-Elektroden-Einheiten 114 umfassen. Die Bipolarplatten 113 sind mit den Membran-Elektroden-Einheiten 114 abwechselnd gestapelt. Die Membran-Elektroden-Einheiten 114 umfassen jeweils eine Membran und beidseitig der Membran anschließende Elektroden, nämlich eine Anode und eine Kathode (nicht dargestellt). An der Membran anliegend weisen die Membran-Elektroden-Einheiten 114 zudem (ebenfalls nicht dargestellte) Gasdiffusionslagen auf. Zwischen den Bipolarplatten 113 und Membran-Elektroden-Einheiten 114 sind jeweils Dichtungselemente 115 angeordnet, welche die Anoden- und Kathodenräume gasdicht nach außen abdichten. Zwischen den Endplatten 111 und 112 ist der Brennstoffzellenstapel 100 mittels Zugelementen 116 verpresst. Es sind in Figur 1 von den Bipolarplatten 113 und den Membran-Elektroden-Einheiten 114 lediglich die Schmalseiten sichtbar. Die Hauptseiten der Bipolarplatten 113 und der Membran-Elektroden-Einheiten 114 liegen aneinander an. Die Darstellung in Figur 1 ist nicht dimensionsgetreu. Zudem ist die Anzahl der Einzelzellen üblicherweise wesentlich größer als dargestellt. Figur 1 dient lediglich zur Veranschaulichung des grundsätzlichen Aufbaus eines Brennstoffzellenstapels 100 aus verschiedenen Elementen, wie er auch für die nach dem erfindungsgemäßen Verfahren hergestellten Elementen relevant ist.

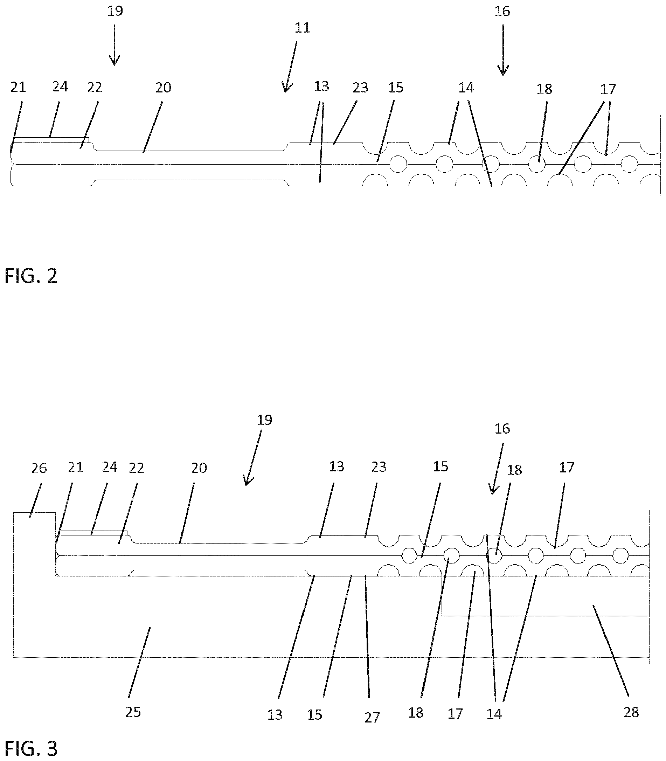

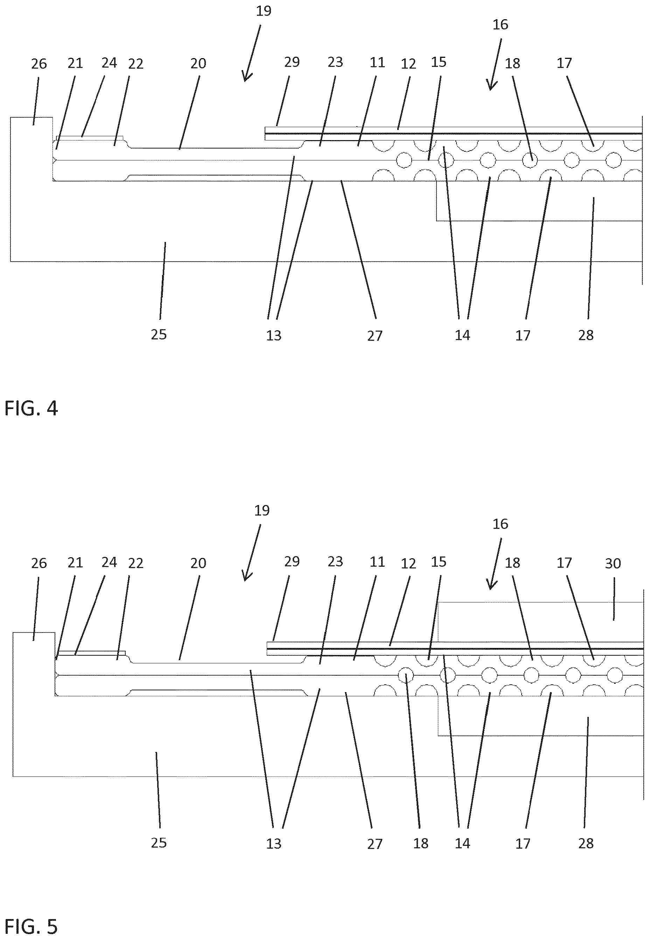

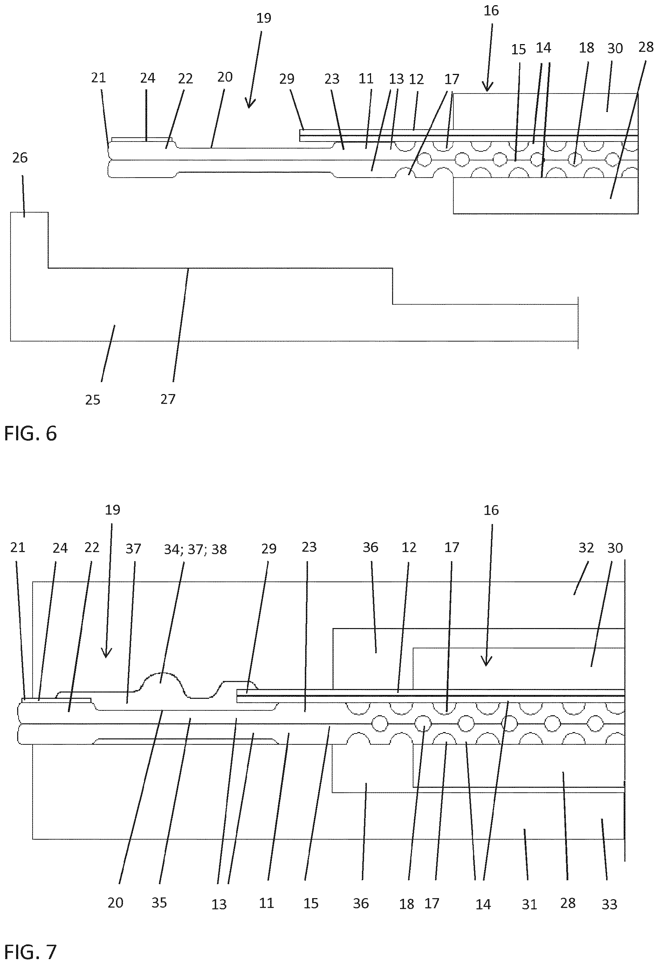

In den Figuren 2 bis 8 wird das erfindungsgemäße Verfahren zum Herstellen eines Verbunds 10 aus einer Bipolarplatte 11 und einer Membran-Elektroden-Einheit 12 für eine nicht dargestellte Brennstoffzelle oder einen nicht dargestellten Brennstoffzellenstapel in einzelnen Schritten dargestellt, wobei abweichende Bezugszeichen zur Figur 1 zum Stand der Technik verwendet werden. Figur 2 zeigt eine Bipolarplatte 11, die zwei gleichartige Platten 13 zur Ausbildung der Bipolarplatte 11 aufweisen. Die beiden Platten 13 des Bipolarplatte 11 weisen jeweils eine Zellseite 14 und eine Kühlseite 15 auf, wobei die Kühlseiten 15 beider Platten 13 einander zugewandt sind. Die Platten 13, d.h. der dargestellte Teil der Platten 13 ist unterteilt in einen aktiven Bereich 16, in dem die Zellreaktion stattfindet und der daher mit Kanälen 17 für die unterschiedlichen Reaktionsgase und Kanälen 18 für ein Kühlmittel durchzogen ist, und einen Randbereich 19, der unterschiedliche Funktionen aufweist und auch der Abdichtung der einzelnen, nicht dargestellten Brennstoffzellen untereinander dient. Der Randbereich 19 der Platten 13 ist auf der Kühlseite 15 plan ausgeführt. Auf den einander abgewandten Zellseiten 14 der Platten 13 ist eine Vertiefung 20 vorgesehen, so dass der an der Plattenkante 21 liegende Teil 22 des Randbereichs 19 und der an dem aktiven Bereich angrenzende Teil 23 des Randbereichs 19 ein gleiches Niveau aufweisen, wobei sich dazwischen die Vertiefung 20 erstreckt. Der an der Plattenkante 21 liegende Teil 22 des Randbereichs 19 ist mit einer flachen Dichtung 24 versehen. Wie in Figur 3 ersichtlich, wird die Bipolarplatte 11 in ein Werkzeug 25 eingebracht. Zur Positionierung der Bipolarplatte weist das Werkzeug 25 einen Anschlag 26 auf, an den die Bipolarplatte 10 mit seinem Randbereich 19 anliegt. Ansonsten weist das Werkzeug 25 eine plane Auflagefläche 27 für die Bipolarplatte 11 auf. In die Auflagefläche 26 ist im Bereich des aktiven Bereichs 16 der Bipolarplatte 11 ein ferromagnetisches Element 28 eingebracht, das derart beschaffen ist, dass es sich orthogonal zur Auflagefläche 27 anheben und aus dieser entfernen lässt. Im eingepassten Zustand des ferromagnetischen Elements 28 ist dieses Teil der Auflagefläche 27. Im nächsten Schritt wird, wie in Figur 4 gezeigt, eine Membran-Elektroden-Einheit (MEA) 12 auf den aktiven Bereich 16 der Bipolarplatte 11 gebracht, die sich vom aktiven Bereich 16 bis in den Bereich der Vertiefung 20 erstreckt, so dass das Ende 29 der MEA 12 nicht aufliegt. Nach dem Positionieren der MEA 12 auf der Bipolarplatte 11 werden MEA 12 und Bipolarplatte 11 derart fixiert, dass sich diese beim weiteren Verfahren nicht gegeneinander verschieben lassen. Zur Fixierung wird ein magnetisches Element 30 auf die MEA 12 aufgebracht, wobei dieses vorzugsweise deckungsgleich mit dem ferromagnetischen Element 28 in der Auflagefläche 27 des Werkzeugs 25 ausgerichtet ist. Wie in Figur 6 ersichtlich, wird die mit dem ferromagnetischen Element 28 und dem magnetischen Element 30 auf der Bipolarplatte 11 fixierte MEA 12 dem Werkzeug 25 entnommen und in ein zweites Werkzeug 31 (Figur 7) verbracht. Bei dem zweiten Werkzeug 31 handelt es sich in der dargestellten Ausführungsform des Verfahrens um ein Spritzgusswerkzeug.

Das zweite Werkzeug 31 besteht aus zwei zusammensetzbaren Hälften 32, 33. Die Hälften 32, 33 des Werkzeugs 31 weisen im Kontaktbereich mit der Bipolarplatte 11 eine definierte Struktur auf, die im geschlossenen Zustand des zweiten Werkzeugs 31 zu der Ausbildung von Formräumen 34, 35 auf beiden Seiten des Randbereichs 19 der Bipolarplatte 11 führt.

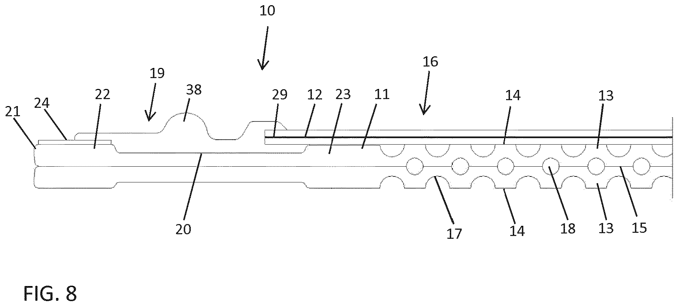

Weiterhin wird durch die beiden Hälften 32, 33 des zweiten Werkzeugs 31 die Bipolarplatte 11 sowie MEA 12 klemmend gehalten. Weiterhin bilden die beiden Hälften 31, 32 einen (zweiten) Raum 36 aus, in dem bei geschlossenen Zustand des Werkzeugs 31 der Bereich der Bipolarplatte 11 mit dem ferromagnetischen Element 28 und dem magnetischen Element 30 angeordnet ist. Dieser Raum 36 dient nicht als Formraum. In zumindest dem Formraum 34 des Werkzeugs 31, der sich auf der Zellseite 14 der Bipolarplatte 11 mit der bereits vorhandenen Dichtung 24 befindet, wird ein Dichtmaterial 37 in schmelzflüssigem Zustand eingebracht. Dieses Dichtmaterial 37 verteilt sich infolgedessen im Formraum 34 des Werkzeugs 31 auf der Bipolarplatte 11 und auf bzw. unter der MEA 12, wobei die Vertiefung 20 der Bipolarplatte 11 ausgefüllt wird. Zusätzlich verteilt sich das Dichtmaterial 37 auf einem Teil der Oberfläche der flachen Dichtung 24. Bei dem Dichtmaterial 21 handelt es sich vorzugsweise um ein Polymer, insbesondere einen Thermoplasten, ein Elastomer oder ein thermoplastisches Elastomer, welches im ausgehärteten Zustand weiterhin elastische Eigenschaft aufweist. Grundsätzlich sind alle Materialien einsetzbar, welche dem Fachmann bereits zur Dichtung der Zellseite 13 von Bipolarplatten 11 zugänglich sind. Nach einem Aushärten des Dichtmaterials 37 wird eine Dichtung 38 mit einem Profil erhalten. In einem weiteren Verfahrensschritt wird der hergestellte Verbund 10 aus Bipolarplatte 11 und MEA 12 entnommen, wobei erst zu diesem Zeitpunkt das ferromagnetische Element 28 und das magnetische Element 30 entfernt werden, und kann zum Aufbau eines Brennstoffzellenstapels genutzt werden. Dazu wird eine Vielzahl der erfindungsgemäßen Verbünde 11 aufeinander gestapelt, so dass die Dichtungen 24, 38 im Randbereich 19 jeweils einer weiteren Bipolarplatte 11 eines Verbundes 10 anliegen. Der erhaltene Verbund 10 ist in Figur 8 dargestellt. Die beiden Dichtungen 24, 38 sind jeweils um den gesamten Umfang der Bipolarplatten 11 angeordnet und verhindern bei der Anordnung zu einem Brennstoffzellenstapel, der analog zum Brennstoffstapel 100 in Figur 1 ausgebildet ist, eine Leckage von Betriebsmitteln.

### Bezugszeichenliste

- 100: Brennstoffzellenstapel
- 111: erste Endplatte
- 112: zweite Endplatte
- 113: Bipolarplatte
- 114: Membran-Elektroden-Einheit
- 115: Dichtungselement
- 116: Spannelement

- 10: Verbund
- 11: Bipolarplatte
- 12: Membran-Elektroden-Einheit
- 13: Platten
- 14: Zellseite
- 15: Kühlseite
- 16: aktiver Bereich
- 17: Kanal für Reaktionsgase
- 18: Kanal für Kühlmittel
- 19: Randbereich
- 20: Vertiefung
- 21: Plattenkante
- 22: Teil des Randbereichs
- 23: Teil des Randbereichs
- 24: flache Dichtung
- 25: Werkzeug
- 26: Anschlag
- 27: Auflagefläche
- 28: ferromagnetisches Element
- 29: Ende der MEA
- 30: magnetisches Element
- 31: zweites Werkzeug
- 32, 33: Hälften des zweiten Werkzeugs
- 34, 35: Formraum
- 36: zweiter Raum
- 37: Dichtmaterial
- 38: Dichtung

## Patentansprüche

1. Verfahren zum Herstellen eines Verbunds (10) aus einer Bipolarplatte (11) und einer Membran-Elektroden-Einheit (12) für eine Brennstoffzelle oder einen Brennstoffzellenstapel, wobei die Bipolarplatte (11) zwei gegenüberliegende Platten (13) umfasst und jede Platte (13) eine Zellseite (14) und eine Kühlseite (15) aufweist, und das Verfahren die Schritte umfasst:
a) Anordnen der Bipolarplatte (11) in einem Werkzeug (25), das ein ferromagnetisches oder magnetisches Element (28) aufweist, das die Auflagefläche (27) für die Bipolarplatte (11) teilweise ausbildet und aus dem Werkzeug (25) entnehmbar ausgebildet ist,
b) Anordnen einer Membran-Elektroden-Einheit (12) auf der der Auflagefläche (27) des Werkzeugs (25) entgegengesetzten Seite der Bipolarplatte (11),
c) Anordnen eines zweiten ferromagnetischen oder magnetischen Elements (30), das korrespondierend zu dem ersten ferromagnetischen oder magnetischen Element (28) ausgebildet ist, um aufeinander eine magnetische Anziehung ausüben zu können, auf der Membran-Elektroden-Einheit (12) derart, dass beide ferromagnetische oder magnetische Elemente (28, 30) zumindest teilweise kongruent sind,
d) Entnehmen von miteinander durch die beiden ferromagnetischen oder magnetischen Elemente (28, 30) fixierte Membran-Elektroden-Einheit (12) und Bipolarplatte (11),
e) Einlegen von miteinander durch die beiden ferromagnetischen oder magnetischen Elemente (28, 30) fixierte Membran-Elektroden-Einheit (12) und Bipolarplatte (11) in ein zweites Werkzeug (31), das in geschlossenem Zustand zumindest einen Formraum (34, 35) auf einer Seite oder auf beiden Seiten des Randbereichs (19) der Bipolarplatte (11) und einen zweiten Raum (36) zur Aufnahme der beiden magnetischen oder ferromagnetischen Elemente (28, 30) aufweist, wobei der Formraum (34, 35) und der zweite Raum (36) voneinander getrennt sind,
f) Einspritzen einer Schmelze eines polymeren Dichtungsmaterials (37) in den zumindest einen Formraum (34, 35) des Werkzeuges (31),
g) Erstarren lassen der Schmelze,
h) Entformen und Entnahme des in f) gebildeten Verbundes (10), und
i) gegebenenfalls Entfernen der beiden magnetischen oder ferromagnetischen Elemente (28, 30).

2. Verfahren nach Anspruch 1, **dadurch gekennzeichnet, dass** die beiden magnetischen oder ferromagnetischen Elemente (28, 30) deckungsgleich angeordnet werden.

3. Verfahren nach Anspruch 1 oder 2, **dadurch gekennzeichnet, dass** im Bereich der Plattenkante (21) der Bipolarplatte (11) vor Schritt e) eine umlaufende Dichtung (24) aufgebracht wird.

4. Verfahren nach einem der Ansprüche 1 bis 3, **dadurch gekennzeichnet, dass** die Bipolarplatte (11) einen umlaufenden Randbereich (19) aufweist, der eine ebenfalls umlaufende Vertiefung (20) besitzt, wobei die Vertiefung (20) korrespondierend zum zumindest einen Formraum (34, 35) des Werkzeuges (31) angeordnet wird, so dass das Dichtmaterial (37) die Vertiefung (20) ausfüllt und ein- oder beidseitig der Vertiefung (20) jeweils einen Teil des nicht vertieften Randbereichs (19) bedeckt.

5. Verfahren nach Anspruch 4, **dadurch gekennzeichnet, dass** das Dichtmaterial (37) die umlaufende Dichtung (24) teilweise bedeckt.

6. Verfahren nach Anspruch 4 oder 5, **dadurch gekennzeichnet, dass** die Membran-Elektroden-Einheit (12) derart angeordnet wird, das diese teilweise die Vertiefung (20) des Randbereichs (19) überdeckt.

7. Verfahren nach Anspruch 6, **dadurch gekennzeichnet, dass** das Dichtmaterial (37) die Membran-Elektroden-Einheit (12) zumindest im Bereich der Vertiefung (29) umgibt.

8. Verfahren nach einem der Ansprüche 1 bis 7, **dadurch gekennzeichnet, dass** das erste Werkzeug (25) einen Anschlag (26) zum Positionieren der Bipolarplatte (11) aufweist.

## Claims

1. Method for producing a composite (10) from a bipolar plate (11) and a membrane electrode unit (12) for a fuel cell or a fuel cell stack, wherein the bipolar plate (11) comprises two opposite plates (13) and each plate (13) has a cell side (14) and a cooling side (15), the method comprises the steps:
a) arranging the bipolar plate (11) in a die (25) which has a ferromagnetic or magnetic element (28) which partially forms the contact surface (27) for the bipolar plate (11) and is designed to be removable from the die (25);
b) arranging a membrane electrode unit (12) on the side of the bipolar plate (11) opposite the contact surface (27) of the die (25);
c) arranging a second ferromagnetic or magnetic element (30), which is designed to correspond to the first ferromagnetic or magnetic element (28) in order to be able to exert a magnetic attraction on one another, on the membrane electrode unit (12) in such a way that both ferromagnetic or magnetic elements (28, 30) are at least partially congruent;
d) removing membrane electrode unit (12) and bipolar plate (11) fixed to one another by the two ferromagnetic or magnetic elements (28, 30);
e) inserting membrane electrode unit (12) and bipolar plate (11) fixed to one another by the two ferromagnetic or magnetic elements (28, 30) into a second die (31), which, in the closed state, has at least one mould cavity (34, 35) on one side or on both sides of an edge region (19) of the bipolar plate (11) and a second chamber (36) for receiving the two magnetic or ferromagnetic elements (28, 30), wherein the mould cavity (34, 35) and the second chamber (36) are separated from one another;
f) injecting a melt of a polymeric sealing material (37) into the at least one mould cavity (34, 35) of the die (31);
g) allowing the melt to solidify;
h) demoulding and removing the composite (10) formed in f) and
i) if necessary removing the two magnetic or ferromagnetic elements (28, 30).

2. Method according to claim 1, **characterised in that** the two magnetic or ferromagnetic elements (28, 30) are arranged congruently.

3. Method according to claim 1 or 2, **characterised in that** a peripheral seal (24) is applied in the region of the plate edge (21) of the bipolar plate (11) before step e).

4. Method according to any of claims 1 to 3, **characterised in that** the bipolar plate (11) has a peripheral edge region (19) which has a likewise peripheral depression (20), wherein the depression (20) is arranged correspondingly to the at least one mould cavity (34, 35) of the die (31) so that the sealing material (37) fills the depression (20) and covers one part of the non-recessed edge region (19) on one or both sides of the depression (20).

5. Method according to claim 4, **characterised in that** the sealing material (37) partially covers the peripheral seal (24).

6. Method according to claim 4 or 5, **characterised in that** the membrane electrode unit (12) is arranged in such a way that it partially covers the depression (20) of the edge region (19).

7. Method according to claim 6, **characterised in that** the sealing material (37) surrounds the membrane electrode unit (12) at least in the region of the depression (29).

8. Method according to any of claims 1 to 7, **characterised in that** the first die (25) has a stop (26) for positioning the bipolar plate (11).

## Revendications

1. Procédé de fabrication d'un composite (10) à partir d'une plaque bipolaire (11) et d'un groupe d'électrodes à membrane (12) pour une pile à combustible ou un empilement de piles à combustible, dans lequel la plaque bipolaire (11) comprend deux plaques (13) se faisant face et chaque plaque (13) présente un côté pile (14) et un côté refroidissement (15), et le procédé comprend les étapes consistant à :
a) agencer la plaque bipolaire (11) dans un outil (25) qui présente un élément magnétique ou ferromagnétique (28) qui réalise partiellement la surface d'appui (27) destinée à la plaque bipolaire (11) et qui est réalisé de manière à pouvoir être retiré de l'outil (25),
b) agencer un groupe d'électrodes à membrane (12) sur le côté de la plaque bipolaire (11) qui est opposé à la surface d'appui (27) de l'outil (25),
c) agencer un second élément magnétique ou ferromagnétique (30), qui est réalisé de manière à correspondre au premier élément magnétique ou ferromagnétique (28) afin que s'exerce une attraction magnétique réciproque, sur le groupe d'électrodes à membrane (12) de telle manière que les deux éléments magnétiques ou ferromagnétiques (28, 30) sont au moins partiellement congruents,
d) retirer le groupe d'électrodes à membrane (12) et la plaque bipolaire (11) fixés l'un à l'autre grâce aux deux éléments magnétiques ou ferromagnétiques (28, 30),
e) insérer le groupe d'électrodes à membrane (12) et la plaque bipolaire (11) fixés l'un à l'autre grâce aux deux éléments magnétiques ou ferromagnétiques (28, 30) dans un second outil (31) qui, à l'état fermé, présente au moins un espace de moulage (34, 35) sur un côté ou sur les deux côtés de la région de bord (19) de la plaque bipolaire (11) et un second espace (36) permettant de recevoir les deux éléments magnétiques ou ferromagnétiques (28, 30), dans lequel l'espace de moulage (34, 35) et le second espace (36) sont séparés l'un de l'autre,
f) injecter une masse en fusion d'un matériau d'étanchéité polymère (37) dans le au moins un espace de moulage (34, 35) de l'outil (31),
g) laisser la masse en fusion se solidifier ;
h) démouler et retirer le composite (10) formé en f), et
i) retirer éventuellement les deux éléments magnétiques ou ferromagnétiques (28, 30).

2. Procédé selon la revendication 1, **caractérisé en ce que** les deux éléments magnétiques ou ferromagnétiques (28, 30) sont agencés de manière coïncidente.

3. Procédé selon la revendication 1 ou 2, **caractérisé en ce qu'**un joint périphérique (24) est appliqué dans la région de la rive de plaque (21) de la plaque bipolaire (11) avant l'étape e).

4. Procédé selon l'une quelconque des revendications 1 à 3, **caractérisé en ce que** la plaque bipolaire (11) présente une région de bord (19) périphérique qui possède une dépression (20) également périphérique, dans lequel la dépression (20) est agencée de manière à correspondre à au moins un espace de moulage (34, 35) de l'outil (31), de sorte que le matériau d'étanchéité (37) remplit la dépression (20) et recouvre respectivement une partie de la région de bord (19) non déprimée d'un côté ou des deux côtés de la dépression (20).

5. Procédé selon la revendication 4, **caractérisé en ce que** le matériau d'étanchéité (37) recouvre partiellement le joint périphérique (24).

6. Procédé selon la revendication 4 ou 5, **caractérisé en ce que** le groupe d'électrodes à membrane (12) est agencé de manière à recouvrir partiellement la dépression (20) de la région de bord (19).

7. Procédé selon la revendication 6, **caractérisé en ce que** le matériau d'étanchéité (37) entoure le groupe d'électrodes à membrane (12) au moins dans la région de la dépression (29).

8. Procédé selon l'une quelconque des revendications 1 à 7, **caractérisé en ce que** le premier outil (25) présente une butée (26) permettant de positionner la plaque bipolaire (11).
